# EUROPEAN PATENT SPECIFICATION

(11) **EP 4 290 642 B1**
(45) Date of publication and mention of the grant of the patent: **23.09.2026**
(21) Application number: 22887522.5
(22) Date of filing: 24.10.2022
(51) Int. Cl.: H01M 10/0585, H01M 10/052, H01M 10/04, H01M 10/0525, H01M 50/105

(54) **ELECTRODE ASSEMBLY AND SECONDARY BATTERY COMPRISING SAME**
ELEKTRODENANORDNUNG UND SEKUNDÄRBATTERIE DAMIT
ENSEMBLE ÉLECTRODE ET BATTERIE SECONDAIRE LE COMPRENANT

(30) Priority: 27.10.2021 KR 20210144435
(43) Date of publication of application: 13.12.2023
(73) Proprietor: LG ENERGY SOLUTION, LTD., Seoul 07335 (KR)
(72) Inventor: CHO, Kwooman, Daejeon 34122 (KR)
(74) Representative: Plasseraud IP
(86) International application number: PCT/KR2022/016244
(87) International publication number: WO 2023/075326

(56) References cited:
- EP-A1- 2 808 933
- WO-A1-2021/157915
- CN-B- 105 576 297
- JP-A- 2016 091 664
- JP-A- 2017 503 311
- KR-A- 20070 021 126
- KR-A- 20130 131 246
- KR-A- 20160 139 412

## Description

### [Technical Field]

This application claims the benefit of priority based on Korean Patent Application No. 10-2021-0144435, filed on October 27, 2021.

The present invention relates to an electrode assembly and a secondary battery comprising the same, and more particularly, to an electrode assembly which can solve, in a complex way, the lithium leaching problem caused by the electrode sliding phenomenon, the problem that the outer separator of the half-cell is easily folded and torn, thereby exposing the electrode, and the problem that it is difficult to check whether the electrode is damaged because the outer separator of the half-cell is opaque, by changing the outer separator of the half-cell located at the outermost part of the electrode assembly to a specific shape and material, and a secondary battery comprising the same.

### [Background Art]

As technology development and demand for mobile devices and automobiles increase explosively, more research is being conducted on secondary batteries having high energy density and discharging voltage, and excellent output stability. Examples of such secondary batteries may comprise lithium secondary batteries such as lithium-sulfur batteries, lithium-ion batteries, and lithium-ion polymer batteries. In addition, the secondary battery as described above can be divided into cylindrical, prismatic, pouch-type, etc. depending on its shape, and among them, interest and demand for pouch-type battery cells are gradually increasing. The pouch-type battery cell can be stacked with a high degree of integration, has a high energy density per weight, and is inexpensive and easy to deform. Accordingly, the pouch-type battery cell can be manufactured in a shape and size applicable to various mobile devices and automobiles.

In a typical secondary battery, an electrode assembly comprising a positive electrode, a negative electrode, and a separator interposed between the positive electrode and the negative electrode is stacked and accommodated in the battery case. As such, the electrode assembly accommodated in the battery case can be specifically classified as a Jelly-roll type (or wound type) formed by interposing a separator between the positive electrode and the negative electrode of a sheet type coated with an active material and winding them, a stacked type formed by sequentially stacking a plurality of positive and negative electrodes with a separator interposed therebetween, and a stack/folding type formed by winding stacked type unit cells together with a long separator, etc.

Among them, the stacked type electrode assembly is being manufactured through a process of attaching the cut electrode to the separator with strong heat and pressure through the lamination process to manufacture mono cells, and stacking them sequentially and then finally providing a half-cell at the top. In addition, in order to fix the stacked mono cells and the half-cell as one unit, a process of attaching a tape at regular intervals may also be performed. WO 2021/157915 A1, EP 2 808 933 A1, CN 105 576 297 B disclose stacked type secondary battery cells.

However, the stacked type electrode assembly currently being applied has a problem that lithium (Li) is leached in the corresponding sliding part, by the difference between the contact areas of the positive electrode and the negative electrode due to the electrode sliding phenomenon. In addition, this lithium leaching problem can cause the lifetime of the battery to decrease, and furthermore, can cause explosions and even fire accidents. Therefore, there is an urgent need to develop a novel stacked type electrode assembly that can solve the above problems.

In addition, the outer separator of the half-cell, located at the outermost part of the electrode assembly, is frequently in contact with equipment and human hands, and is easily folded even with the same rigidity as a cloth, and when scratched by hard or sharp parts, is torn, thereby causing a problem in which the electrode is exposed. In addition, since the outer separator of the half-cell is opaque (i.e., it does not transmit light), there is a problem that it is difficult to check whether the electrode is damaged. Therefore, it is also necessary to change the outer separator of the half-cell located in the outermost part of the electrode assembly to a material that (1) has tensile strength that is not folded and not easily torn, (2) transmits light well, (3) is easy to supply and has competitive prices, (4) does not chemically react when the electrolyte solution penetrates, (5) has excellent thermal stability to withstand high temperatures during charging, and (6) is light in weight and does not harm competitiveness in capacity per weight.

### [Disclosure]

### [Technical Problem]

Accordingly, it is an object of the present invention to provide an electrode assembly which can solve, in a complex way, the lithium leaching problem caused by the electrode sliding phenomenon, the problem that the outer separator of the half-cell is easily folded and torn, thereby exposing the electrode, and the problem that it is difficult to check whether the electrode is damaged because the outer separator of the half-cell is opaque, by changing the outer separator of the half-cell located at the outermost part of the electrode assembly to a specific shape and material, and a secondary battery comprising the same.

### [Technical Solution]

In order to achieve the above object, the present invention provides an electrode assembly defined in the appended set of claims, and the electrode assembly comprises a mono cell formed by sequentially stacking a unit cell formed by stacking a separator and a negative electrode and a unit cell formed by stacking a separator and a positive electrode, a half-cell formed by stacking a separator, a negative or positive electrode and a pressure plate, and a wrapping member for fixing the mono cell and the half-cell by winding them in the full-width direction after stacking them, wherein the half-cell is stacked so that the separator is positioned on the upper surface of the negative electrode or the positive electrode exposed to the outside of the mono cell, and different electrodes are positioned with the separator as a boundary, and wherein the pressure plate of the half-cell comprises a slope portion in which the electrode interfaces of both ends in the full-length direction are inclined in the electrode direction.

In addition, the present invention provides a secondary battery comprising the electrode assembly; and a receiving case for accommodating the electrode assembly.

### [Advantageous Effects]

The electrode assembly according to the present invention and the secondary battery comprising the same has an advantage that the lithium leaching problem caused by the electrode sliding phenomenon, the problem that the outer separator of the half-cell is easily folded and torn, thereby exposing the electrode, and the problem that it is difficult to check whether the electrode is damaged because the outer separator of the half-cell is opaque, can be solved in a complex way by changing the outer separator of the half-cell located at the outermost part of the electrode assembly to a specific shape and material.

### [Description of Drawings]

FIG. 1 is a side schematic diagram showing the electrode sliding phenomenon that occurs in a typical stacked type electrode assembly.
FIG. 2 is a side schematic diagram showing that the contact area with the separator changes depending on the difference in the sliding degree of one end of the positive electrode active material and the negative electrode active material in one mono cell.
FIG. 3 is a side schematic diagram showing that one end of the positive electrode active material and the negative electrode active material is slid in one mono cell while the negative electrode active material and the separator are spaced apart from each other.
FIG. 4 is a schematic diagram of a typical stacked type electrode assembly in which the negative electrode active material is designed longer than the positive electrode active material.
FIG. 5 is a side schematic diagram showing the problem that the contact area between the positive electrode active material and the separator is wider than the contact area between the negative electrode active material and the separator, even when the negative electrode active material is designed to be longer than the positive electrode active material.
FIG. 6 is a schematic diagram showing the typical stacked type electrode assembly fixed and compressed with tape.
FIG. 7 is a side schematic diagram of an electrode assembly according to an embodiment of the present invention.
FIG. 8 is a side schematic diagram of the pressure plate provided in the outermost part of the half-cell of the electrode assembly according to an embodiment of the present invention.

### [Best Mode]

Hereinafter, the present invention will be described in detail with reference to the accompanying drawings.

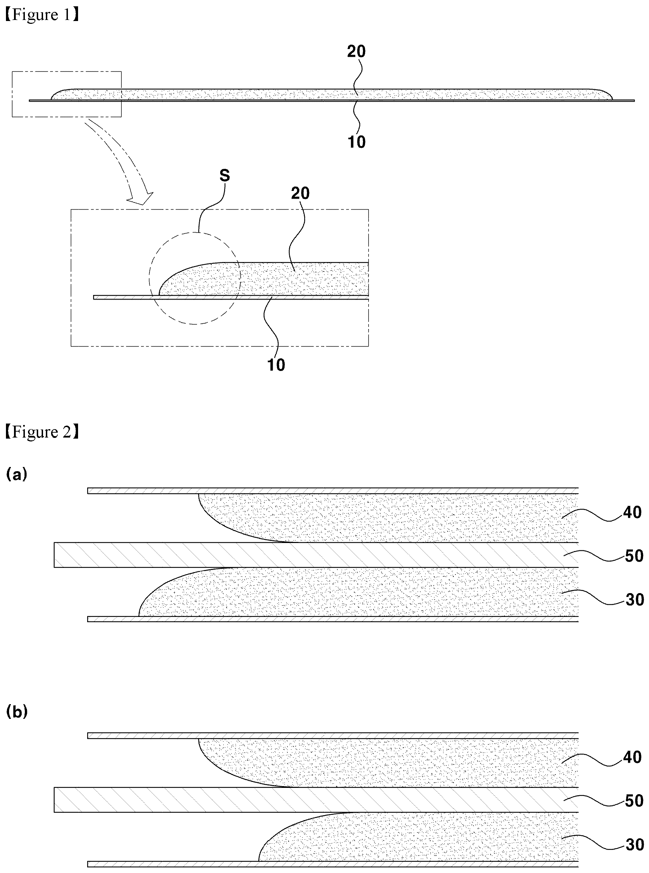

FIG. 1 is a side schematic diagram showing the electrode sliding phenomenon in a typical stacked type electrode assembly. In a typical stacked type electrode assembly, the electrode active material 20 in a viscous liquid state is applied to one side of the metal current collector (for example, the positive electrode may be aluminum and the negative electrode may be copper, 10), and at this time, a slope portion S having a length of several to tens of mm is formed on each of both ends (the direction in which the tab is positioned) of the electrode active material 20 due to surface tension or thermal non-uniformity during the process, as shown in FIG. 1.

FIG. 2 is a side schematic diagram showing that the contact area with the separator changes depending on the difference in the sliding degree of one end of the positive electrode active material and the negative electrode active material in one mono cell. FIG. 2(a) corresponds to a case in which the contact area between the negative electrode active material 30 and the separator 50 is wider than the contact area between the positive electrode active material 40 and the separator 50, and 2(b) corresponds to a case where the contact area between the positive electrode active material 40 and the separator 50 is wider than the contact area between the negative electrode active material 30 and the separator 50 (the vertical line in the active material 30, 40 means the starting point of the inclination). As mentioned above, if the electrode active material is applied, a sliding phenomenon appears. At this time, if the contact area between the negative electrode active material 30 and the separator 50 is narrower than the contact area between the positive electrode active material 40 and the separator 50, lithium is inevitably leached by such narrowed area, as shown in FIG. 2(b). Therefore, it is necessary to manufacture so that the contact area between the negative electrode active material 30 and the separator 50 is wider than the contact area between the positive electrode active material 40 and the separator 50.

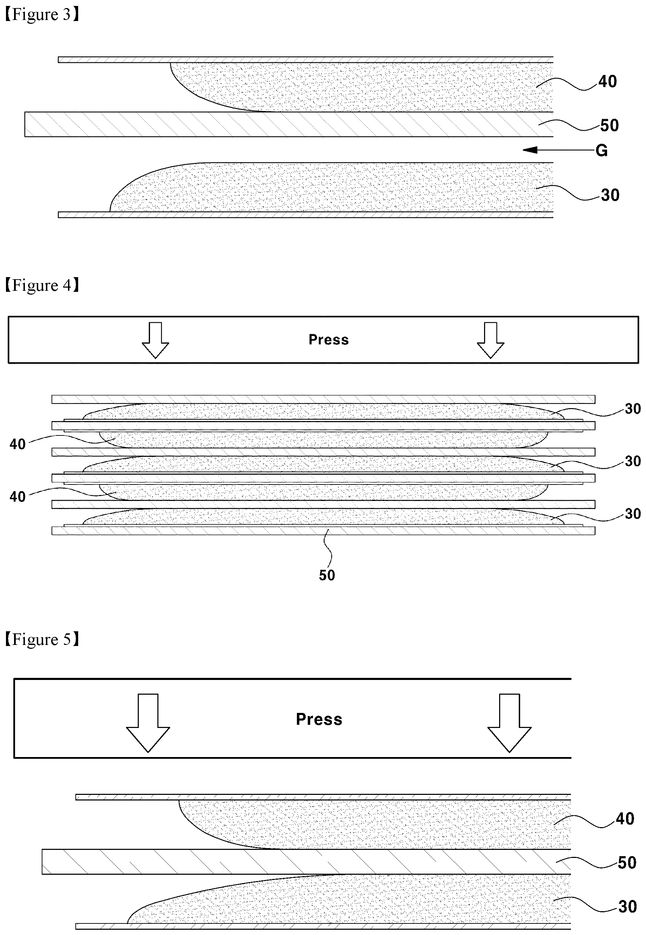

FIG. 3 is a side schematic diagram showing that one end of the positive electrode active material and the negative electrode active material is slid in one mono cell while the negative electrode active material and the separator are spaced apart from each other. In addition, if the negative electrode active material 30 and the separator 50 are spaced apart from each other, it also causes lithium leaching as in the case of a difference in the contact area between the active material and the separator, as shown in FIG. 3. Therefore, there should be no empty space (gap, G) between the negative electrode active material 30 and the separator 50. In addition, FIG. 3, as an example, indicates that since the leaching of lithium can occur even when the positive electrode active material 40 and the separator 50 are spaced apart from each other, it should be manufactured so that there is no empty space both between the negative electrode active material 30 and the separator 50 and between the positive electrode active material 40 and the separator 50.

FIG. 4 is a schematic diagram of a typical stacked type electrode assembly in which the negative electrode active material is designed longer than the positive electrode active material. Due to the above reasons, a stacked type electrode assembly is manufactured in the art by injecting an electrolyte solution and then pressing so that the contact area between the negative electrode active material 30 and the separator 50 is wider than the contact area between the positive electrode active material 40 and the separator 50, and also there is no empty space both between the negative electrode active material 30 and the separator 50 and between the positive electrode active material 40 and the separator 50, as shown in FIG. 4.

FIG. 5 is a side schematic diagram showing the problem that the contact area between the positive electrode active material and the separator is wider than the contact area between the negative electrode active material and the separator, even when the negative electrode active material is designed to be longer than the positive electrode active material. As described above, a stacked type electrode assembly is manufactured in the art by injecting an electrolyte solution and then pressing so that the contact area between the negative electrode active material 30 and the separator 50 is wider than the contact area between the positive electrode active material 40 and the separator 50, and also there is no empty space both between the negative electrode active material 30 and the separator 50 and between the positive electrode active material 40 and the separator 50. However, even when manufactured in this way, there actually occurs a problem that the contact area between the positive electrode active material 40 and the separator 50 is wider than the contact area between the negative electrode active material 30 and the separator 50, as shown in FIG. 5. That is, even if the negative electrode active material 30 is designed to be longer than the positive electrode active material 40, since the inclination of the negative electrode active material 30 formed during sliding is made more gently than the inclination of the positive electrode active material 40, the contact area between the negative electrode active material 30 and the separator 50 is narrower than the contact area between the positive electrode active material 40 and the separator 50. In addition, such a problem is difficult to solve even when pressing is performed, as shown in FIG. 5.

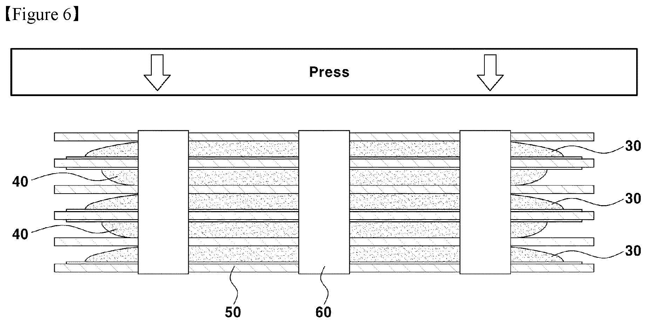

FIG. 6 is a schematic diagram showing the typical stacked type electrode assembly fixed and compressed with tape. In addition, in the art, in order to solve the above problem, that is, the problem that even if the negative electrode active material 30 is designed longer than the positive electrode active material 40, the contact area between the negative electrode active material 30 and the separator 50 is narrower than the contact area between the positive electrode active material 40 and the separator 50, a method of fixing and compressing an electrode assembly (half-cell + mono cell) with a tape (halogen free, 60) is also used in addition to the pressing, as shown in FIG. 6. However, due to the structure of the stacked type electrode assembly, since it is difficult to attach the tape to both ends in which the electrode is slid, the tape is attached only to the central portion of the electrode assembly and its peripheral portion, as shown in FIG. 6 (for example, both ends of the electrode assembly are excluded, and 3-5 tapes with a width of 20-30 mm are attached). Accordingly, since the electrode sliding phenomenon occurs, both ends of the electrode assembly with the slope portion are not received at all by the force by the tape, and even in this case, it may lead to an explosion and a fire accident due to the leaching of lithium.

Therefore, the applicant of the present invention has developed a stacked type electrode assembly in which it is ensured that there is no or minimized empty space both between the negative electrode active material and the separator and between the positive electrode active material and the separator, and also in which the contact area between the negative electrode active material and the separator is wider than the contact area between the positive electrode active material and the separator even though the electrode assembly is fixed and compressed by the wrapping member.

Hereinafter, the present invention will be described in more detail with reference to the accompanying drawings.

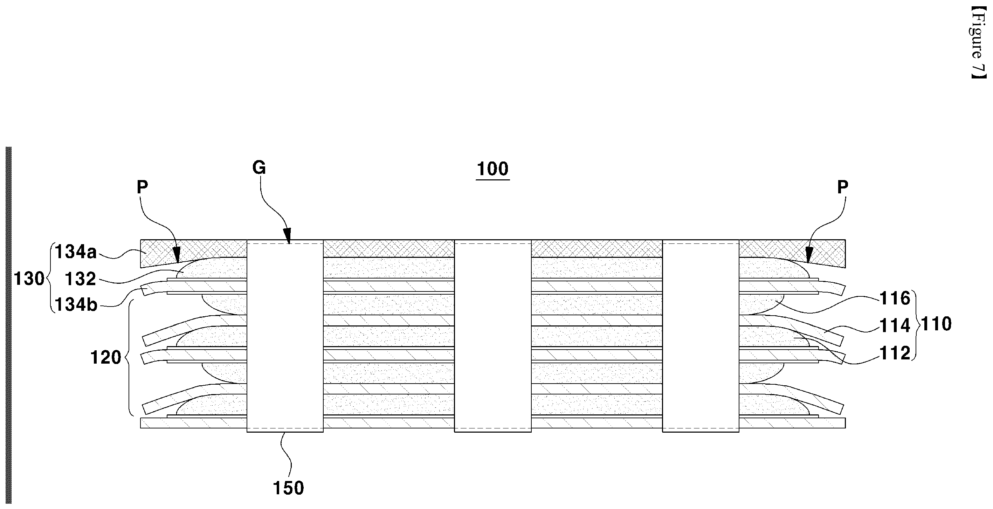

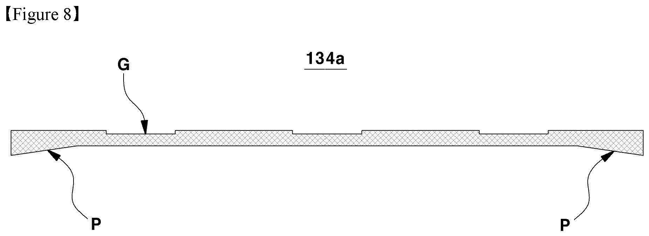

FIG. 7 is a side schematic diagram of an electrode assembly according to an embodiment of the present invention, and FIG. 8 is a side schematic diagram of the pressure plate provided in the outermost part of the half-cell of the electrode assembly according to an embodiment of the present invention. Referring to FIGS. 7 and 8, the electrode assembly 100 according to an embodiment of the present invention comprises
a mono cell 120 formed by sequentially stacking a unit cell formed by stacking a separator and a negative electrode 112 and a unit cell formed by stacking a separator 114 and a positive electrode 116, a half-cell 130 formed by stacking a separator 134b, a negative or positive electrode 132 and a pressure plate 134a, and a wrapping member 150 for fixing the mono cell 120 and the half-cell 130 by winding them in the full-width direction after stacking them, wherein the half-cell 130 is stacked so that the separator 134b is positioned on the upper surface of the negative electrode or the positive electrode exposed to the outside of the mono cell 120, different electrodes are positioned with the separator 134b as a boundary, and the pressure plate 134a of the half-cell 130 includes a slope portion P in which the electrode interfaces of both ends in the full-length direction are inclined in the electrode direction.

The greatest feature of the present invention lies in the shape of the pressure plate 134a provided on the outermost part of the half-cell 130 of the electrode assembly 100. That is, as shown in FIGS. 7 and 8, since the surface (i.e., electrode interface) opposite to the negative electrode 132 of the pressure plate 134a located at the outermost part of the half-cell 130 has a slope portion P inclined in the electrode direction, and it has a shape that gets closer to the electrode (negative electrode or positive electrode, 132) as it goes toward both ends in the full-length direction. The reason is to increase the contact area between the electrode 132 and the pressure plate 134a included in the half-cell 130, through the sliding phenomenon that occurs when a viscous electrode active material is applied on a metal current collector, that is, the slope portion P formed on both ends of the electrode active material included in the electrode when applied on the metal current collector.

More ultimately, the reason that the surface opposite to the electrode 132 of the pressure plate 134a located in the outermost part of the half-cell 130 has a shape that gets closer to the electrode 132, as it goes toward both ends in the full-length direction, is to make the contact area between the negative electrode 112 and the separator 114 wider than the contact area between the positive electrode 116 and the separator 114 in each unit mono cell 110 located below the half-cell 130 (therefore, the contact area between the negative electrode and the separator in the electrode assembly is larger than the contact area between the positive electrode and the separator).

That is, if the outer peripheral surfaces of the mono cell 120 and the half-cell 130 are wrapped together in their full width direction by the wrapping member 150 and fixed and compressed, the slope portion P of both ends of the pressure plate 134a included in the half-cell 130 is in close contact with the electrode 132. In addition, at the same time, by pulling together both ends of the separator 134b included in the half-cell 130 and also both ends of the electrode and separator included in the mono cell 120 in the lower direction, the contact area between the negative electrode 112 and the separator 114 in each unit mono cell 110 is wider than the contact area between the positive electrode 116 and the separator 114. That is, in other words, even within each unit mono cell 110, to the slope portion of both ends of the negative electrode active material included in the negative electrode 112, both ends of the separator 114 facing it are matched.

This is because the slope portion formed by sliding the negative electrode active material 30 faces upward, while the slope portion formed by sliding the positive electrode active material 40 faces downward, as shown in FIGS. 2, 3 and 5. That is, in other words, if both ends of the separator 114 of the unit mono cell 110 are pulled by the wrapping member 150, it is matched to the shape of the slope portion of the negative electrode 112 facing upward, but it is not matched to the shape of the positive electrode 116 in which the slope portion faces downward. That is, the slope portion of both ends of the negative electrode active material included in the negative electrode 112 of the unit mono cell 110 faces upward, and is matched to both ends of the separator 114 facing it, and the slope portion of both ends of the positive electrode active material included in the positive electrode 116 of the unit mono cell 110 faces downward, and is not matched to both ends of the separator 114 facing it. Due to this reason, the contact area between the negative electrode 112 and the separator 114 in each unit mono cell 110 is wider than the contact area between the positive electrode 116 and the separator 114. At this time, it is also natural that there is no or minimized empty space both between the negative electrode and the separator and between the positive electrode and the separator in the electrode assembly.

Also, in the same manner as the pressure plate 134a included in the half-cell 130, the separator positioned to face the upper surface of the negative electrode 112, among the separators included in the mono cell 120 may also have a shape adjacent to the negative electrode 112 as the surface opposite to the negative electrode 112 goes toward both ends in the full-length direction (that is, it may be similar to the appearance shown in FIG. 7). That is, it may have a thicker thickness than the central portion as is goes toward both ends (that is, it may have a slope portion).

Meanwhile, each of both ends of the pressure plate 134a included in the half-cell 130 has a shape that gets closer to the electrode 132 included in the half-cell 130 as described above. Accordingly, both ends of the pressure plate 134a included in the half-cell 130 inevitably have a thicker thickness than the central portion of the pressure plate 134a included in the half-cell 130. For example, the thickness of each of both ends of the pressure plate 134a included in the half-cell 130 may be about 30 to 50 *µ*m thicker than the thickness of the central portion (shape that gradually thickens toward the end), and when applying this to an electrode assembly containing about 20 (stack) unit mono cells, the negative electrode can be in contact with the maximum area to the separator included in all unit mono cells.

Accordingly, the pressure plate 134a should comprise a slope portion P in which the electrode interfaces of both ends in the full-length direction are inclined in the electrode direction. In this case, the pressure plate 134a may have a plate shape in which both ends in the full-length direction are bent in the electrode direction. In addition, the curved portion of the pressure plate 134a may have a straight shape or a curved shape bent in the electrode direction. Meanwhile, the pressure plate 134a has a flat plate shape as a basic structure as shown in FIG. 8, but it may also have a shape in which an inclination surface forming structure that gradually thickens toward the distal end is added to the electrode-facing surface of both ends in the full-length direction. In this case, the inclination surface may be in the form of a straight line or a curved surface bent in the electrode direction. In addition, the pressure plate 134a is not particularly limited in shape as long as the thickness of both ends thereof is thicker than that of the central portion, such as the surface opposite to the electrode may have a curved surface concavely curved in the full-length direction.

If the pressure plate 134a included in the half-cell 130 has excellent flexural rigidity and hardness, the effect described above may be more pronounced. To this end, the pressure plate 134a may comprise polypropylene resin, and preferably may be made of only polypropylene resin. In addition, the melting point of the pressure plate 134a comprising the polypropylene resin may be about 170°C, and the specific gravity may be about 0.91 g/cm³. In addition, during the related process, the temperature of the heater rises to about 80°C. As described above, if the polypropylene resin having a high melting temperature of about 135 to 160°C is comprised in the pressure plate 134a, it also has the advantage that the melting phenomenon of the pressure plate 134a does not occur at all, even if the temperature of the heater rises to the maximum.

Usually, the outer separator (corresponding to the pressure plate of the present invention) of the half-cell located in the outermost part of the electrode assembly is frequently in contact with equipment and human hands, and is easily folded even with the same rigidity as a cloth, and when scratched by hard or sharp parts, is torn, thereby causing a problem in which the electrode is exposed. In addition, such a problem degrades the performance of the battery and may even cause a fire. Therefore, the applicant of the present invention has paid attention to the point that the outer surface of the outer separator included in the half-cell is independent of the cell reaction, and then has changed the material to a stabilized polypropylene resin that not only has rigidity (excellent flexural rigidity and hardness), but also does not deform even by an electrolyte solution (i.e., excellent chemical stability (acidity and alkalinity at room temperature), instead of conventional materials. Therefore, it is possible to solve the problems of the existing material. In addition, if the pressure plate 134a is made of a transparent polypropylene resin and a transparent adhesive (e.g., an epoxy adhesive) is used, it is also possible to check the status, such as to check whether the electrode 132 in the half-cell 130 is broken by an external shock.

The wrapping member 150 surrounds the outer peripheral surfaces of the mono cell 120 and the half-cell 130 together in the full-width direction, so that it serves to draw both ends of the pressure plate 134a included in the half-cell 130 with a stronger force. Accordingly, at least one or more wrapping members 150 should be positioned on each of both ends of the electrode assembly 100 to surround the outer peripheral surfaces of the mono cell 120 and the half-cell 130. However, it may be preferable to surround the central portion of the electrode assembly 100 with the wrapping member 150 so that the contact area between the electrode and the separator can be wider. In addition, the number of the wrapping members 150 installed is not particularly limited, as long as the contact area between the electrode and the separator can be maximized.

As the wrapping member 150, an adhesive member to which an adhesive component is provided and a non-adhesive member to which an adhesive component is not provided may be exemplified. The adhesive member to which the adhesive component is provided may be a tape or one in which an adhesive component is separately added to a member that does not break by an appropriate level even when tensile force is applied. In addition, as the non-adhesive member, a member that does not break by an appropriate level even when a tensile force is applied may be exemplified, and in this case, since adhesion is impossible, it can be fixed through various methods such as tying both ends after surrounding the electrode assembly.

Meanwhile, according to another embodiment of the present invention, a groove (or engraved pattern, G) capable of accommodating and mounting the wrapping member 150 may be formed on the opposite surface (i.e., the outer surface) not facing the electrode 132 in the pressure plate 134a provided in the outermost part of the half-cell 130, in the full-width direction, as shown in FIGS. 7 and 8. This is for more stable fixation and compression, and at least one of the grooves G may be formed on both ends of the opposite surface not facing the electrode 132 in the pressure plate 134a provided in the outermost part of the half-cell 130. In addition, the groove G may be preferably formed up to the central portion of the opposite surface not facing the negative electrode 132 in the pressure plate 134a provided in the outermost part of the half-cell 130. In addition, the number of the grooves G is not particularly limited, as long as it is possible to maximize the effect by the wrapping member 150 accommodated and mounted in the groove portion G, and for example, 2 to 5 grooves G may be formed as described above. According to the above, the wrapping member 150 is characterized in that it is wound to be accommodated in the groove G.

In addition, since the width and depth of the groove portion G may be set in various ways depending on the width and depth of the wrapping member 150, the width and depth of the groove portion G are also not particularly limited. However, as an example, if the thickness of each of both ends of the pressure plate 134a included in the half-cell 130 is about 30 to 50 *µ*m thicker than the thickness of the central portion (as an extreme example, when the thickness of both ends of the pressure plate 134a is 210 to 230 *µ*m, and the thickness of the central portion of the pressure plate 134a is 180 *µ*m), it may be preferable that the depth of the groove portion G is formed to be about 22 *µ*m.

Next, a secondary battery according to the present invention will be described. The secondary battery includes the electrode assembly of the present invention described above and a receiving case for accommodating the electrode assembly. In addition, the secondary battery is not particularly limited in use, but it may be preferable that it is a battery for a vehicle. The secondary battery may be any battery that can accommodate the electrode assembly inside a receiving case such as a pouch, but is preferably a lithium-based secondary battery. As the lithium-based secondary battery, all of the lithium-based secondary batteries having lithium leaching problem may be exemplified, and more specifically, a lithium-ion battery may be exemplified.

In the case where the secondary battery of the present invention is a lithium-ion battery, the positive electrode active material may be exemplified by lithium cobalt oxide (LiCoO₂), lithium nickel oxide (LiNiO₂), lithium manganese oxide (LiMnO₂, LiMn₂O₄, etc.), lithium iron phosphate compound (LiFePO₄) and lithium nickel cobalt manganese-based positive electrode active material (or lithium NCM-based positive electrode active material, or NCM-based lithium composite transition metal oxide, or high Ni positive electrode material). In addition, the positive electrode further includes a binder and an electrically conductive material in addition to the positive electrode active material.

The binder is a component that assists in the bonding between a positive electrode material (a positive electrode active material) and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinyl acetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrenebutadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode material and the current collector may be insufficient. If the content of the binder is more than 50 parts by weight, the adhesive strength is improved but the content of the positive electrode material may be reduced accordingly, thereby lowering the capacity of the battery.

The electrically conductive material comprised in the positive electrode is not particularly limited as long as it has excellent electrical conductivity without causing side reactions in the internal environment of the battery and causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight based on 100 parts by weight of total weight of the positive electrode. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode may be prepared according to a conventional method known in the art. For example, negative electrode active material, electrically conductive material, the binder and if necessary, a filler and the like are dispersed and mixed in a dispersion medium (solvent) to form a slurry, and the slurry can be applied onto the negative electrode current collector, followed by drying and rolling it to prepare a negative electrode. As the negative electrode active material, a compound capable of reversibly intercalating and de-intercalating lithium may be used. A specific example of the negative electrode active material may be carbonaceous materials such as artificial graphite, natural graphite, graphitized carbon fiber, and amorphous carbon; metallic compounds capable of alloying with lithium, such as Si, Al, Sn, Pb, Sb, Zn, Bi, In, Mg, Ga, Cd, Si alloy, Sn alloy, or Al alloy; metal oxides capable of doping and de-doping lithium, such as SiO_{β}(0<β<2), SnO₂, vanadium oxide, and lithium vanadium oxide; or a composite including the above-mentioned metallic compound and carbonaceous material, such as a Si-C composite or a Sn-C composite, and any one or a mixture of two or more thereof may be used. In addition, a metal lithium thin film may be used as the negative electrode active material. In addition, as the carbon material, both low crystalline carbon and high crystalline carbon may be used. As low crystalline carbon, soft carbon and hard carbon are representative, and as high crystalline carbon, amorphous, plate-like, flaky, spherical or fibrous natural or artificial graphite, Kish graphite, pyrolytic carbon, mesophase pitch-based carbon fiber, meso-carbon microbeads, mesophase pitches and high-temperature calcined carbon such as petroleum or coal tar pitch derived cokes are representative.

In addition, the binder and electrically conductive material used for the negative electrode may be the same as those described above for the positive electrode. The negative electrode current collector may be, but is not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), or an alloy thereof, or copper (Cu) or stainless steel whose surface was treated with carbon (C), nickel (Ni), titanium (Ti) or silver (Ag) or so on. The shape of the negative electrode current collector may be in the form of a foil, film, sheet, punched form, porous body, foam or the like.

Except for the pressure plate (134a) located at the outermost part of the half-cell in the electrode assembly, the remaining inner separators may be, but is not limited to, olefin-based polymers such as polyethylene and polypropylene, glass fibers or the like in the form of a sheet, a multi-membrane, a microporous film, a woven fabric, a non-woven fabric and the like. However, it may be preferable to apply a porous polyethylene or a porous glass fiber nonwoven fabric (glass filter) as a separator, and it may be more preferable to apply a porous glass filter (glass fiber nonwoven fabric) as a separator.

Meanwhile, when a solid electrolyte such as a polymer (e.g., organic solid electrolyte, inorganic solid electrolyte, etc.) is used as the electrolyte, the solid electrolyte may also serve as a separator. Specifically, an insulating thin film having high ion permeability and mechanical strength is used. The pore diameter of the separator may be generally 0.01 to 10 *µ*m, and the thickness may be generally in the range of 5 to 300 *µ*m, but is not limited thereto.

The electrolyte or electrolyte solution may be a non-aqueous electrolyte solution (non-aqueous organic solvent). As the non-aqueous electrolyte, carbonate, ester, ether, or ketone may be used alone or in combination of two or more, but is not necessarily limited thereto. For example, aprotic organic solvents such as dimethyl carbonate, diethyl carbonate, dipropyl carbonate, methylpropyl carbonate, ethylpropyl carbonate, methylethyl carbonate, ethylene carbonate, propylene carbonate, butylene carbonate, γ-butylolactone, n-methyl acetate, n-ethyl acetate, n-propyl acetate, phosphoric acid triester, dibutyl ether, N-methyl-2-pyrrolidinone, 1,2-dimethoxy ethane, tetrahydrofuran derivatives such as 2-methyl tetrahydrofuran, dimethylsulfoxide, formamide, dimethylformamide, dioxolane and derivatives thereof, acetonitrile, nitromethane, methyl formate, methyl acetate, trimethoxy methane, sulfolane, methyl sulfolane, 1,3-dimethyl-2-imidazolidinone, methyl propionate, ethyl propionate may be used, but is not limited thereto.

A lithium salt may be further added to the electrolyte solution (so-called non-aqueous electrolyte solution containing lithium salt), and the lithium salt may be a known lithium salt that is well soluble in a non-aqueous electrolyte, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, lithium lower aliphatic carboxylate, lithium tetraphenyl borate, and lithium imide, etc., but is not necessarily limited thereto. The (non-aqueous) electrolyte solution may comprise, for example, pyridine, triethylphosphite, triethanolamine, cyclic ether, ethylene diamine, glyme-based compounds, hexamethylphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride or the like, for the purpose of improving charging-discharging characteristics, flame retardancy, and the like. If necessary, halogen-containing solvents such as carbon tetrachloride and ethylene trifluoride may be further added to impart nonflammability, and carbon dioxide gas may be further added to improve the high-temperature conservation characteristics.

Meanwhile, the secondary battery can be manufactured by a conventional method in the art. For example, the secondary battery can be manufactured by inserting the porous separator between the positive electrode and the negative electrode, and introducing the non-aqueous electrolyte solution. The lithium secondary battery according to the present invention is applied to a battery cell used as a power source for a small-sized device, and can be also particularly suitably used as a unit cell for a battery module, which is a power source for a medium or large-sized device. In this respect, the present invention also provides a battery module in which at least two lithium secondary batteries are electrically connected (in series or in parallel). It is needless to say that the number of lithium secondary batteries comprised in the battery module may be variously adjusted in consideration of the use and capacity of the battery module.

In addition, the present invention provides a battery pack in which the battery modules are electrically connected according to a conventional technique in the art. The battery module and the battery pack may be used as a power source for at least one medium and large-sized device selected from power tools; electric cars comprising an electric vehicle (EV), a hybrid electric vehicle (HEV), and a plug-in hybrid electric vehicle (PREV); electric trucks; electric commercial vehicles; or power storage systems, but the present invention is not limited thereto.

Although the present invention has been described through preferred embodiments as described above, the present invention is not limited thereto, and it will be readily understood by those skilled in the art to which the present invention pertains that various modifications and variations are possible without departing from the scope of the claims set forth below.

### [Description of Symbol]

10: Metal current collector
20: Electrode active material (S: Slope portion)
30: Negative electrode active material
40: Positive electrode active material
50: Separator
60: Tape
100: Electrode assembly
110: Unit mono cell (112: negative electrode, 114: separator, 116: positive electrode)
120: Mono cell
130: Half-cell (132: electrode, 134a: pressure plate, 134b: separator, G: groove portion)
150: Wrapping member

## Claims

1. An electrode assembly (100), comprising:
a mono cell (120) formed by sequentially stacking a unit cell formed by stacking a separator (114) and a negative electrode (112) and a unit cell formed by stacking a separator (114) and a positive electrode (116),
a half-cell (130) formed by stacking a separator (134b), a negative or positive electrode (132) and a pressure plate (134a), and
a wrapping member (150) for fixing the mono cell (120) and the half-cell (130) by winding them in the full-width direction after stacking them,
wherein the half-cell (130) is stacked so that the separator (134b) is positioned on the upper surface of the negative electrode (112) or the positive electrode (116) exposed to the outside of the mono cell (120), and different electrodes are positioned with the separator as a boundary, and
wherein the pressure plate (134a) of the half-cell (130) comprises a slope portion (P) in which the electrode interfaces of both ends in the full-length direction are inclined in the electrode direction, and
a contact area between the negative electrode (112) and the separator (114) is larger than a contact area between the positive electrode (116) and the separator (114).

2. The electrode assembly according to claim 1, wherein the thickness of each of both ends of the pressure plate (134a) is about 30 to 50 *µ*m thicker than the thickness of the central portion.

3. The electrode assembly according to claim 1, wherein the pressure plate (134a) has a plate shape in which both ends in the full-length direction are curved in the electrode direction.

4. The electrode assembly according to claim 3, wherein the bent portion of the plate (134a) has a straight shape or a curved shape that is bent in the electrode direction.

5. The electrode assembly according to claim 1, wherein the pressure plate (134a) has a flat plate shape as a basic structure, but it has a shape in which an inclination surface forming structure that gradually thickens toward the distal end is added to the electrode-facing surface of both ends in the full-length direction.

6. The electrode assembly according to claim 5, wherein the inclination surface is a straight shape or a curved shape bent in the electrode direction.

7. The electrode assembly according to claim 1, wherein the pressure plate (134a) has a curved surface in which the electrode facing surface is concavely curved in the full-length direction.

8. The electrode assembly according to claim 1, wherein on the outer surface of the pressure plate (134a), a groove (G) for accommodating the wrapping member (150) is formed in the full-width direction.

9. The electrode assembly according to claim 8, wherein two to five grooves (G) are formed.

10. The electrode assembly according to claim 8, wherein the wrapping member (150) is wound to be accommodated in the groove.

11. The electrode assembly according to claim 1, wherein the pressure plate contains polypropylene resin.

12. The electrode assembly according to claim 1, wherein the pressure plate is made of only polypropylene resin.

13. The secondary battery comprising the electrode assembly of claim 1; and a receiving case for accommodating the electrode assembly.

14. The secondary battery according to claim 13, wherein the secondary battery is a lithium-based secondary battery.

## Patentansprüche

1. Elektrodenanordnung (100), umfassend:
eine Monozelle (120), die durch sequenzielles Stapeln einer Einheitszelle, die durch Stapeln eines Separators (114) und einer negativen Elektrode (112) gebildet wird, und einer Einheitszelle, die durch Stapeln eines Separators (114) und einer positiven Elektrode (116) gebildet wird, gebildet ist,
eine Halbzelle (130), die durch Stapeln eines Separators (134b), einer negativen oder positiven Elektrode (132) und einer Druckplatte (134a) gebildet ist, und
ein Umwicklungselement (150) zum Fixieren der Monozelle (120) und der Halbzelle (130), durch deren Wickeln nach dem Stapeln in Richtung der vollen Breite,
wobei die Halbzelle (130) gestapelt ist, sodass der Separator (134b) auf der oberen Oberfläche der negativen Elektrode (112) oder der positiven Elektrode (116) positioniert ist, die zur Außenseite der Monozelle (120) freiliegt, und unterschiedliche Elektroden mit dem Separator als Grenze positioniert sind, und
wobei die Druckplatte (134a) der Halbzelle (130) einen Abschrägungsabschnitt (P) umfasst, in dem die Elektrodenschnittstellen beider Enden in Richtung der vollen Länge in der Elektrodenrichtung geneigt sind, und
eine Kontaktfläche zwischen der negativen Elektrode (112) und dem Separator (114) größer ist als eine Kontaktfläche zwischen der positiven Elektrode (116) und dem Separator (114).

2. Elektrodenanordnung nach Anspruch 1, wobei die Dicke jedes der beiden Enden der Druckplatte (134a) etwa 30 bis 50 µm dicker ist als die Dicke des mittleren Abschnitts.

3. Elektrodenanordnung nach Anspruch 1, wobei die Druckplatte (134a) eine Plattenform aufweist, bei der beide Enden in Richtung der vollen Länge in der Elektrodenrichtung gekrümmt sind.

4. Elektrodenanordnung nach Anspruch 3, wobei der gebogene Abschnitt der Platte (134a) eine gerade Form oder eine gekrümmte Form aufweist, die in der Elektrodenrichtung gebogen ist.

5. Elektrodenanordnung nach Anspruch 1, wobei die Druckplatte (134a) eine flache Plattenform als Grundstruktur aufweist, jedoch eine Form aufweist, bei der eine struktur-bildende Neigungsoberfläche, die allmählich zum distalen Ende hin dicker wird, der der Elektrode zugewandten Oberfläche beider Enden in Richtung der vollen Länge hinzugefügt wird.

6. Elektrodenanordnung nach Anspruch 5, wobei die Neigungsoberfläche eine gerade Form oder eine gekrümmte Form ist, die in der Elektrodenrichtung gebogen ist.

7. Elektrodenanordnung nach Anspruch 1, wobei die Druckplatte (134a) eine gekrümmte Oberfläche aufweist, bei der die der Elektrode zugewandte Oberfläche in der Richtung der vollen Länge konkav gekrümmt ist.

8. Elektrodenanordnung nach Anspruch 1, wobei auf der Außenoberfläche der Druckplatte (134a) eine Nut (G) zur Aufnahme des Umwicklungselements (150) in Richtung der vollen Breite gebildet ist.

9. Elektrodenanordnung nach Anspruch 8, wobei zwei bis fünf Nuten (G) gebildet sind.

10. Elektrodenanordnung nach Anspruch 8, wobei das Umwicklungselement (150) gewickelt ist, um in der Nut aufgenommen zu werden.

11. Elektrodenanordnung nach Anspruch 1, wobei die Druckplatte Polypropylenharz enthält.

12. Elektrodenanordnung nach Anspruch 1, wobei die Druckplatte nur aus Polypropylenharz hergestellt ist.

13. Sekundärbatterie, umfassend die Elektrodenanordnung nach Anspruch 1; und ein Aufnahmegehäuse zur Aufnahme der Elektrodenanordnung.

14. Sekundärbatterie nach Anspruch 13, wobei die Sekundärbatterie eine Sekundärbatterie auf Lithiumbasis ist.

## Revendications

1. Un ensemble d'électrodes (100), comprenant :
une mono-cellule (120) formée en empilant séquentiellement une cellule unitaire formée en empilant un séparateur (114) et une électrode négative (112) et une cellule unitaire formée en empilant un séparateur (114) et une électrode positive (116),
une demi-cellule (130) formée en empilant un séparateur (134b), une électrode négative ou positive (132) et une plaque de pression (134a), et
un élément d'enveloppement (150) pour fixer la mono-cellule (120) et la demi-cellule (130) en les enroulant dans la direction de la pleine largeur après les avoir empilées,
dans lequel la demi-cellule (130) est empilée de sorte que le séparateur (134b) est positionné sur la surface supérieure de l'électrode négative (112) ou de l'électrode positive (116) exposée à l'extérieur de la mono-cellule (120), et des électrodes différentes sont positionnées avec le séparateur comme frontière, et
dans lequel la plaque de pression (134a) de la demi-cellule (130) comprend une partie en pente (P) dans laquelle les interfaces d'électrode des deux extrémités dans la direction de la pleine longueur sont inclinées dans la direction de l'électrode, et
une zone de contact entre l'électrode négative (112) et le séparateur (114) est plus grande qu'une zone de contact entre l'électrode positive (116) et le séparateur (114).

2. L'ensemble d'électrodes selon la revendication 1, dans lequel l'épaisseur de chacune des deux extrémités de la plaque de pression (134a) est environ supérieure de 30 à 50 µm à l'épaisseur de la partie centrale.

3. L'ensemble d'électrodes selon la revendication 1, dans lequel la plaque de pression (134a) a une forme de plaque dans laquelle les deux extrémités dans la direction de la pleine longueur sont incurvées dans la direction de l'électrode.

4. L'ensemble d'électrodes selon la revendication 3, dans lequel la partie pliée de la plaque (134a) a une forme droite ou une forme incurvée dans la direction de l'électrode.

5. L'ensemble d'électrodes selon la revendication 1, dans lequel la plaque de pression (134a) a une forme de plaque plate comme structure de base, mais elle a une forme dans laquelle une structure formant une surface d'inclinaison qui s'épaissit progressivement vers l'extrémité distale est ajoutée à la surface faisant face à l'électrode à chacune des deux extrémités dans la direction de la pleine longueur.

6. L'ensemble d'électrodes selon la revendication 5, dans lequel la surface d'inclinaison est une forme droite ou une forme incurvée dans la direction de l'électrode.

7. L'ensemble d'électrodes selon la revendication 1, dans lequel la plaque de pression (134a) a une surface incurvée dans laquelle la surface faisant face à l'électrode est incurvée de manière concave dans la direction de la pleine longueur.

8. L'ensemble d'électrodes selon la revendication 1, dans lequel sur la surface extérieure de la plaque de pression (134a), une rainure (G) pour recevoir l'élément d'enveloppement (150) est formée dans la direction de la pleine largeur.

9. L'ensemble d'électrodes selon la revendication 8, dans lequel deux à cinq rainures (G) sont formées.

10. L'ensemble d'électrodes selon la revendication 8, dans lequel l'élément d'enveloppement (150) est enroulé pour être reçu dans la rainure.

11. L'ensemble d'électrodes selon la revendication 1, dans lequel la plaque de pression contient de la résine de polypropylène.

12. L'ensemble d'électrodes selon la revendication 1, dans lequel la plaque de pression est faite uniquement de résine de polypropylène.

13. La batterie secondaire comprenant l'ensemble d'électrodes de la revendication 1 ; et un boîtier de réception pour recevoir l'ensemble d'électrodes.

14. La batterie secondaire selon la revendication 13, dans laquelle la batterie secondaire est une batterie secondaire à base de lithium.
